# EUROPÄISCHE PATENTSCHRIFT

(11) **EP 1 537 339 B1**
(45) Veröffentlichungstag und Bekanntmachung des Hinweises auf die Patenterteilung: **27.12.2006**
(21) Anmeldenummer: 03757785.5
(22) Anmeldetag: 04.09.2003
(51) Int. Cl.: F16D 7/02, A61C 1/18

(54) **EINRICHTUNG ZUM ÜBERLASTUNGS-SCHUTZ ZAHNMEDIZINISCHER INSTRUMENTE**
DEVICE FOR PROTECTING DENTAL INSTRUMENTS FROM BEING OVERLOADED
DISPOSITIF DE PROTECTION D'INSTRUMENTS DENTAIRES CONTRE TOUTE SURCHARGE

(30) Priorität: 05.09.2002 DE 20213744 U
(43) Veröffentlichungstag der Anmeldung: 08.06.2005
(73) Patentinhaber: Behr, Gabriele, 82211 Herrsching (DE)
(72) Erfinder: Behr, Gabriele, 82211 Herrsching (DE)
(74) Vertreter: Reinhard - Skuhra - Weise & Partner
(86) Internationale Anmeldenummer: PCT/EP2003/009815
(87) Internationale Veröffentlichungsnummer: WO 2004/022993

(56) Entgegenhaltungen:
- GB-A- 738 791
- GB-A- 962 270
- GB-A- 1 272 854
- US-A- 3 105 371
- US-A- 4 536 156
- US-A- 5 678 672
- US-B1- 6 208 053

## Beschreibung

Die Erfindung betrifft eine Vorrichtung zum Schutz motorisch betriebener zahnmedizinischer Instrumente, wie Bohrer, Feilen, usw. gegen einen Überlastungsbruch.

### Überblick, Stand der Technik:

Moderne zahnmedizinische Behandlungsinstrumente ("Bohrer", "Feilen") unterliegen in ihrem Einsatz einer hohen mechanischen Belastung. Obwohl häufig aus hochfesten Materialien (z.B. Titan) hergestellt, werden diese Instrumente oft über ihre Elastizitäts- und Festigkeitsgrenzen hinaus beansprucht, was zu hoher Abnutzung bis hin zum Instrumenten-bruch führt.

Bekannt ist es beispielsweise beim "ENDOSTEPPER" der Firma S.E.T. GmbH, Olching/D, diese Überbelastungen/Überlastung durch elektronische Einrichtungen zu verhindern. Dabei wird das auf den rotierenden Bohrer wirkende mechanische Drehmoment auf ein (für den jeweiligen Instrumenten-Typ spezifisch ermitteltes) erlaubtes Maximum überwacht und begrenzt. Da der (rotatorische) Antrieb dieser Instrumente meist durch Elektromotoren (kommutierte DC-Motoren, Schritt-Motoren etc.) erfolgt, geht es letztlich immer um eine Begrenzung der elektrischen Versorguhgs-Parameter (Strom, Spannung, Leistung, Steuerfrequenz, Drehzahl etc.) des elektrischen Antriebes.

Mit diesen Begrenzungs-Mechanismen wird der Zahnarzt mit Erfolg von der Aufgabe befreit, kritische Arbeitspunkte ("Bruch") seiner Instrumente empirisch/intuitiv zu vermeiden, da die Intelligenz der Ansteuerung diese "kritische Grenze" erkennt und vor deren Erreichen rechtzeitig "abregelt". Dieses Prinzip hat sich bewährt, die Zahl der Instrumentenbrüche kann so deutlich reduziert werden. Das hat ökonomische Vorteile für den Zahnarzt (der Instrumenteneinsatz stellt einen nennenswerten Kostenfaktor dar) und seinen Patienten bleiben "abgebrochene Bohrer im Zahn" weitgehend erspart.

Auch GB 1272859 offenbart eine solche Vorrichtung.

### Erfindungsgegenstand, Beschreibung der Erfindung :

Das oben beschriebene Prinzip der Strombegrenzung des Antriebsmotors ist mit folgendem Nachteil behaftet:

Es wird - unabhängig vom tatsächlich auftretenden Drehmoment am Bohrer - eine jeweils für den Instrumententyp spezifisch vorgegebene Motor-Kennlinie durchfahren, die bei "homogener" Bohrer-Umgebung experimentell ermittelt wurde. In der Realität sind die auftretenden Drehmomente im Wurzelkanal aber stark von der Geometrie des Zahnhalses und der Konsistenz des Zahnmaterials abhängig, so dass eine deutliche Abweichung und Streuung der tatsächlich auftretenden Drehmomente von den experimentell ermittelten Parametern erfolgt. Außerdem wächst das Widerstandsmoment des eindringenden Bohrers in nichtlinearer Weise mit der Eindringtiefe in den Zahn.

Des weiteren geht einem drohenden Instrumentenbruch eine starke Torsion des Bohrers voran, die auch bereits vor Erreichen des maximal tolerierten Antriebs-Drehmoments eintreten kann. Damit kann der Instrumentenbruch auch "unterhalb" des kritischen Antriebs-Drehmoments erfolgen.

Erfindungsgemäß verbessert die folgende Einrichtung die Resistenz gegen Instrumentenbruch:

Eine schlupftolerante Einrichtung (STE), die zwischen Motor-Antriebsachse und Bohrerschaft gesetzt wird, nimmt bei Annäherung an das kritische Antriebs-Drehmoment die entstehende Torsion in sich auf und schützt damit den Bohrer vor dieser Torsion und der Bruchgefahr. Erfindungsgemäß weist die schlupftolerante Einrichtung eine Piezo-Kupplung mit variabel einstellbarer Charakteristik auf.

Grundsätzlich sind hier mehrere Varianten möglich:
(1) die STE ist Teil des Bohrers selbst
(2) die STE wird zusätzlich zwischen Motor und Bohrer eingebracht (nachrüstbar)
(3) die STE ist Teil des Antriebs-Motors

Bei der Auslegung der STE ist folgendes zu beachten:
(a) die "Schlupf-Kennlinie" ist spezifisch für das verwendete Instrument zu wählen (unterschiedliche kritische Drehmomente)
(b) die "Schlupf-Kennlinie" sollte im Bereich des kritischen Drehmoments (KDM) einen sehr "steilen" Verlauf haben, d.h. unterhalb des KDMs sollte der auftretende Schlupf möglichst = 0 sein, bei Erreichen des KDMs sollte er möglichst → ∞ gehen.
(c) es können STEs mit fester Kennlinie (für ein spezifisches Instrument) oder STEs mit variabel einstellbarer Kennlinie (für viele Instrumente einsetzbar) zur Anwendung kommen

Die Piezo-Kupplung ist gut als variable STEs einsetzbar, eine übergeordnete Elektronik übernimmt dabei die Wahl der Schlupf-Parameter, abhängig vom jeweils ausgewählten Instrumententyp.

### Einsatzvorteile der Erfindung:

Das gezeigte Verfahren kann sowohl in Verbindung mit intelligenten Instrumentenantrieben ("ENDOSTEPPER", etc.) eingesetzt werden, zeigt aber auch bei normalem ("nicht intelligentem") Antrieb die erwünschte Wirkung, vor Instrumentenbruch zu schützen.

Der Einsatz der Erfindung ist nicht allein auf elektrische Antriebe beschränkt, auch in Verbindung mit z.B. pneumatischen Antrieben ("Turbinen", etc.) wird der entsprechende Schutzeffekt erreicht.

## Patentansprüche

1. Zahnmedizinische Vorrichtung, aufweisend ein motorisch betriebenes zahnmedizinisches Instrument, einen Antriebsmotor zum motorischen Betreiben des zahnmedizinischen Instruments und eine schlupftoleranten Einrichtung zur Begrenzung des auf das zahnmedizinische Instrument wirkenden Drehmoments auf einen individuell voreinstellbaren Maximalwert, wobei die schlupftolerante Einrichtung zwischen dem Antriebsmotor und dem zahnmedizinischen Instrument als Teil des Instruments oder/und des Antriebsmotors oder/und als Zwischenteil zwischen zahnmedizinischen Instrument und Antriebsmotor angeordnet ist;
**dadurch gekennzeichnet, dass**
die schlupftolerante Einrichtung eine Piezo-Kupplung mit variabel einstellbarer Charakteristik aufweist.

2. Vorrichtung nach Anspruch 1,
**dadurch gekennzeichnet, dass**
das medizinische Instrument ein Bohrer oder eine Feile ist.

## Claims

1. Dental apparatus, comprising a motor-driven dental instrument, a driving motor for motor-driving the dental instrument and a slippage-tolerant device for limiting the torque acting on the dental instrument to an individually settable maximum value, wherein the slippage-tolerant device is arranged between the driving motor and the dental instrument as part of the device or/and the driving motor or/and as an intermediate part between the dental instrument and the driving motor,
**characterized in that**
the slippage-tolerant device device a piezo clutch with variably adjustable characteristics.

2. Apparatus according to claim 1,
**characterized in that**
the dental instrument is a drill or a file.

## Revendications

1. Dispositif odontologique, présentant un instrument odontologique motorisé, un moteur d'entraînement destiné au fonctionnement motorisé de l'instrument odontologique et une installation tolérante au glissement permettant de limiter le moment de couple qui agit sur l'instrument odontologique à une valeur maximale individuellement préréglée, l'installation tolérante au glissement étant disposée entre le moteur d'entraînement et l'instrument dentaire en tant que partie de l'instrument et/ou du moteur d'entraînement et/ou en tant que pièce intermédiaire entre l'instrument et le moteur d'entraînement ;
**caractérisé par le fait que** l'installation tolérante au glissement présente un couplage piézo présentant une caractéristique à réglage variable.

2. Dispositif selon la revendication 1,
**caractérisé par le fait que** l'instrument médical est un foret ou une lime.
